(19) Europäisches Patentamt
European Patent Office
Office européen des brevets

(11) **EP 3 981 835 A1**

(12) **EUROPEAN PATENT APPLICATION**

(43) Date of publication:
**13.04.2022 Bulletin 2022/15**

(21) Application number: **21177361.9**

(22) Date of filing: **02.06.2021**

(51) International Patent Classification (IPC):
**C08L 77/02** (2006.01) **C08K 5/5455** (2006.01)
**C08K 7/14** (2006.01)

(52) Cooperative Patent Classification (CPC):
(C-Sets available)
**C08L 77/02; C08K 5/5455; C08K 7/14** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.10.2020 KR 20200129251**

(71) Applicants:
• **Hyundai Motor Company**
 **Seoul 06797 (KR)**
• **Kia Corporation**
 **Seocho-gu**
 **Seoul 06797 (KR)**
• **GS Caltex Corporation**
 **Seoul 06141 (KR)**

(72) Inventors:
• **SEO, Kyeong Bae**
 **18280 Hwaseong-si, Gyeonggi-do (KR)**

• **NOH, Wan Ki**
 **18280 Hwaseong-si, Gyeonggi-do (KR)**
• **KANG, In Seok**
 **18280 Hwaseong-si, Gyeonggi-do (KR)**
• **SEO, Min Sik**
 **18280 Hwaseong-si, Gyeonggi-do (KR)**
• **LEE, Han Sol**
 **18280 Hwaseong-si, Gyeonggi-do (KR)**
• **PARK, Sang Sun**
 **18280 Hwaseong-si, Gyeonggi-do (KR)**
• **PARK, Jae Han**
 **18280 Hwaseong-si, Gyeonggi-do (KR)**
• **LEE, Hyung Tak**
 **34022 Daejeon (KR)**
• **YONG, Seok Jin**
 **05393 Seoul (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **LONG GLASS FIBER REINFORCED THERMOPLASTIC RESIN COMPOSITION AND MOLDED ARTICLE INCLUDING THE SAME**

(57) Disclosed herein are a long glass fiber reinforced thermoplastic resin composition and a molded article including the same. Specifically, the thermoplastic resin composition may include 30% to 70% by weight of polyamide, 20% to 60% by weight of a reinforcing agent which contains a glass fiber and has a flat-plate shape, and 1% to 5% by weight of a silane-based coupling agent.

## FIG. 1

(52) Cooperative Patent Classification (CPC): (Cont.)

C-Sets
**C08K 5/5455;**
**C08K 7/14**

**Description**

FIELD

The present disclosure relates to a long glass fiber reinforced thermoplastic resin composition and a molded article including the same.

BACKGROUND

The statements in this section merely provide background information related to the present disclosure and may not constitute prior art.

The recent trend of vehicle industry is to make a vehicle lighter, more advanced and eco-friendly. In particular, the reduction in vehicle weight has a significant influence on fuel efficiency and driving performance thereof.

A panorama sunroof, which is developed in order to ventilate an interior of the vehicle and provide a sense of openness, includes a glass and an electric motor, etc. installed on a frame.

Steel having excellent physical properties was mainly used as the frame of the panorama sunroof in order to withstand the loads of surrounding components and external shocks. Recently, an attempt has been made to use an engineering plastic with steel inserted thereinto for the light weight of the vehicle. For example, compared to steel, a reduction in weight of about 30% or more has been achieved by using a material in which polybutylene terephthalate (PBT) is reinforced with a glass fiber.

However, since the polybutylene terephthalate (PBT) / glass fiber material has a disadvantage such as deformation after injection, there is a difficulty in actual application.

Also, an attempt has been made to use a carbon fiber. However, the carbon fiber has made it difficult to expand and apply the above-mentioned technology due to a high cost thereof.

Thus, we have discovered that it is desirable develop a material that can have excellent dimensional stability so that no deformation occurs after injection and can enhance rigidity.

SUMMARY

The present disclosure provides a thermoplastic resin composition that can help to reduce the weight and the unit cost of production while providing high physical properties and dimensional stability desired for a frame of a panorama sunroof.

In one form, a thermoplastic resin composition includes: 30% to 70% by weight of polyamide; 20% to 60% by weight of a reinforcing agent, which includes a glass fiber and is formed in a flat-plate shape; and 1% to 5% by weight of a silane-based coupling agent.

The polyamide may include an aliphatic polyamide.

The aliphatic polyamide may include at least one selected from the group consisting of polyamide 6, polyamide 46, polyamide 66, polyamide 610, polyamide 612, polyamide 6/12, polyamide 1010, polyamide 11, polyamide 1012, polyamide 12, polyamide 1212, and a combination thereof.

The polyamide may have a number average molecular weight of 20,000 to 70,000.

The reinforcing agent may have a flattening, represented by the following Equation 1, which is 2 to 5:

[Equation 1]

Average long-side length in cross section / average short-side length in cross section.

The reinforcing agent may have an average short-side length of a cross section of 3 $\mu$m to 15 $\mu$m.

The reinforcing agent may have a length of 5 mm to 15 mm.

The reinforcing agent may include a sizing material attached to a surface thereof.

The sizing material may include at least one selected from the group consisting of a urethane resin, an acrylic resin, a styrene resin, an epoxy resin, and a combination thereof.

The sizing material may be included in an amount of 0.1% to 3% by weight, based on the total weight of the thermoplastic resin composition.

The silane-based coupling agent may include an isocyanate functional group.

The isocyanate functional group in the silane-based coupling agent may be hydrogen-bonded to the polyamide,

or may be covalently bonded to an amine group of the polyamide.

The silane-based coupling agent may include at least one selected from the group consisting of 3-isocyanate propyl trimethoxysilane, 3-isocyanate propyl triethoxysilane, tris[3-(trimethoxysilyl)propyl]isocyanurate, and a combination thereof.

Further areas of applicability will become apparent from the description provided herein. It should be understood that the description and specific examples are intended for purposes of illustration only and are not intended to limit the scope of the present disclosure.

DRAWINGS

In order that the disclosure may be well understood, there will now be described various forms thereof, given by way of example, reference being made to the accompanying drawings, in which:

FIG. 1 is a result of analyzing a scanning electron microscope (SEM) photograph of a cross section of a reinforcing agent used in Example 1 according to one form of the present disclosure; and
FIG. 2 is result of analyzing an SEM photograph of a cross section of a reinforcing agent used in Comparative Example 8 according to one form of the present disclosure.

The drawings described herein are for illustration purposes only and are not intended to limit the scope of the present disclosure in any way.

DETAILED DESCRIPTION

The following description is merely exemplary in nature and is not intended to limit the present disclosure, application, or uses. It should be understood that throughout the drawings, corresponding reference numerals indicate like or corresponding parts and features.

In the accompanying drawings, dimensions of structures may be enlarged as compared with actual dimensions for clarity of the present disclosure. The terms first, second, etc. may be used to describe various components, but the components are not to be interpreted to be limited to the terms. The terms are used only to distinguish one component from another component. For example, a first component may be referred to as a second component and the second component may also be similarly referred to as the first component, without departing from the scope of the present disclosure. Singular forms are intended to include plural forms unless the context clearly indicates otherwise.

It should be understood that term "comprise" or "have" as used herein, specifies the presence of features, numerals, steps, operations, components, parts mentioned herein, or a combination thereof, but do not preclude the presence or addition of one or more other features, numerals, steps, operations, components, parts, or a combination thereof. It will be understood that when an element such as a layer, a film, a region, or a substrate, is referred to as being "on" another element, it may be "directly on" another element or may have an intervening element present therebetween. In contrast, it will be understood that when an element such as a layer, a film, a region, or a substrate is referred to as being "under" another element, it can be "directly under" the other element or intervening elements may also be present.

It should be understood that unless otherwise specified, all numbers, values and/or expressions expressing quantities of ingredients, reaction conditions, polymer compositions and formulations used herein are approximations reflecting various uncertainties of the measurement that these numbers result from obtaining these values, among other things essentially, and are therefore used in conjunction with the term "about" in all cases. In addition, when numerical ranges are disclosure herein, such ranges are continuous and include all values from a minimum value to a maximum value inclusive of the maximum value of such ranges, unless otherwise indicated. Furthermore, when such ranges refer to an integer, all integers from the minimum value to the maximum value inclusive of the maximum value are included, unless otherwise indicated.

The thermoplastic resin composition according to the present disclosure includes: (A) 30% to 70% by weight of polyamide, (B) 20% to 60% by weight of a reinforcing agent containing a glass fiber, and (C) 1% to 5% by weight of a silane-based coupling agent.

Hereinafter, each configuration of the present disclosure will be described in detail.

(A) Polyamide

The polyamide is a composition for improving mechanical properties, impact resistance, and heat resistance of a molded body prepared from a thermoplastic composition. The polyamide serves as a kind of a base resin.

The polyamide may be an aliphatic polyamide. The aliphatic polyamide may include at least one selected from the group consisting of polyamide 6, polyamide 46, polyamide 66, polyamide 610, polyamide 612, polyamide 6/12, polyamide 1010, polyamide 11, polyamide 1012, polyamide 12, polyamide 1212, and a combination thereof, and may be preferably polyamide 6.

The polyamide may have a low specific gravity of 1.12 to 1.16, which makes it possible to provide the light weight property of the molded body.

The polyamide may have a number average molecular weight of 20,000 to 70,000. The polyamide may be used alone or in combination of two or more polyamides having different number average molecular weights. When the number average molecular weight of the polyamide falls within the above-mentioned range, it is possible to improve moldability of the thermoplastic composition, and mechanical properties, impact resistance and heat resistance of a molded article up to a desired level. Specifically, if the number average molecular weight of the polyamide exceeds 70,000, an impregnation property of the reinforcing agent to be described later is decreased during a pultrusion impregnation process, so that the mechanical properties of the molded article may deteriorate, and the problem of not being molded may occur due to insufficient fluidity of the thermoplastic resin composition during injection processing.

The content of the polyamide may be 30% to 70% by weight. If the content of the polyamide is less than 30% by weight, the fluidity of the thermoplastic resin composition is decreased, so that the appearance and impact resistance of the molded article may deteriorate, and if the content of the polyamide exceeds 70% by weight, the mechanical strength of the molded article may deteriorate.

(B) Reinforcing agent

The reinforcing agent is a composition for achieving a reduction in weight while securing mechanical properties, impact resistance, and dimensional stability of the molded body.

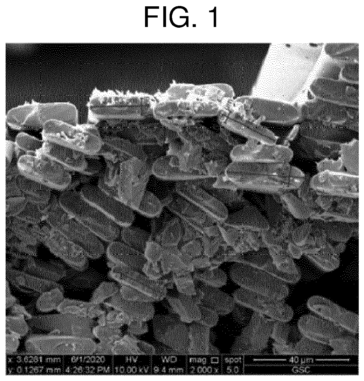

The reinforcing agent may contain a glass fiber and may be a fibrous reinforcing agent having a flat-plate shape with a quadrilateral, elliptical, or polygonal cross section as shown in FIG. 1.

The reinforcing agent may have a flattening represented by the following Equation 1 which is 2 to 5:

[Equation 1]

Average long-side length in cross section / average short-side length in cross section.

A long-side length of the cross section of the reinforcing agent is equal to a length corresponding to the longest distance among the distances between any one, positioned on a perimeter of the cross section of the reinforcing agent and another point where an imaginary straight line which starts from the any one point and passes through a center of the cross section meets.

A short-side length in the cross section of the reinforcing agent is equal to a length corresponding to the shortest distance among the distances between any one point, positioned on the perimeter of the cross section of the reinforcing agent and another point where an imaginary straight line which starts from the any one point and passes through the a center of the cross section meets.

If the reinforcing agent has a flattening of less than 2, the post-deformation in the molded article may occur, and if the reinforcing agent has a flattening exceeding 5, the mechanical properties of the molded article may deteriorate.

The reinforcing agent may have an average short-side length in the cross section of 3 $\mu$m to 15 $\mu$m. If the reinforcing agent has an average short-side length in the cross section of less than 3 $\mu$m, the dispersibility of the reinforcing agent in the polyamide may deteriorate, and if the reinforcing agent has an average short-side length in the cross section exceeding 15 $\mu$m, the mechanical properties and impact resistance of the molded article may deteriorate.

The reinforcing agent may have a length of 5 mm to 15 mm. If the reinforcing agent has a length of less than 5 mm, the strength, rigidity and impact resistance of the molded article may deteriorate, and the dimensional stability of the molded article may also deteriorate.

The reinforcing agent may be treated with a sizing material. Specifically, the reinforcing agent may have the sizing material attached to a surface thereof.

The sizing material is a component for strengthening the bond of the polyamide and the reinforcing agent. The sizing material may be attached to the surface of the reinforcing agent by impregnating the reinforcing agent in the sizing material. However, a method of treating the reinforcing agent is not limited thereto, and any method may be used as long as it is generally used in the technical field to which the present disclosure belongs.

The sizing material may include at least one selected from the group consisting of a urethane resin, an acrylic resin, a styrene resin, an epoxy resin, and a combination thereof.

The content of the sizing material may be 0.1% to 3% by weight, based on the total weight of the thermoplastic resin composition. If the content of the sizing material is less than 0.1% by weight, the dispersibility of the reinforcing agent in the polyamide is decreased, so that the strength of the molded article may deteriorate, and if the content of the sizing material exceeds 3% by weight, the content of the sizing material itself is excessive, so that the strength of the molded article may deteriorate.

The content of the reinforcing agent may be 20% to 60% by weight, or 30% to 50% by weight. If the content of the reinforcing agent is less than 20% by weight, the strength and impact resistance of the molded article may deteriorate, and if the content of the reinforcing agent exceeds 60% by weight, the weight of the molded article may increase and the fluidity of the thermoplastic resin composition may deteriorate.

a. Silane-based coupling agent

The silane-based coupling agent is a component for improving compatibility of the polyamide and the reinforcing agent to improve the mechanical properties and impact resistance of the molded article.

The silane-based coupling agent may include an isocyanate functional group. The isocyanate functional group of the silane-based coupling agent may be hydrogen-bonded to the polyamide or may be covalently bonded to an amine group remaining in the polyamide, thereby greatly improving adhesion between the respective components of the thermoplastic resin composition.

In addition, the silane-based coupling agent including the isocyanate functional group has an advantage in that migration does not occur due to a high molecular weight thereof under a long-term heat-resistant condition, compared to a low molecular weight coupling agent.

The silane-based coupling agent may include at least one selected from the group consisting of 3-isocyanate propyl trimethoxysilane, 3-isocyanate propyl triethoxysilane, tris[3-(trimethoxysilyl)propyl]isocyanurate, and a combination thereof.

The content of the silane-based coupling agent may be 1% to 5% by weight, or 2% to 4% by weight. If the content of the silane-based coupling agent is less than 1% by weight, the mechanical properties and impact resistance of the molded article may deteriorate, and if the content of the silane-based coupling agent exceeds 5% by weight, the melt viscosity of the thermoplastic resin composition may be increased, resulting in deterioration in processability caused by a decrease in fluidity thereof.

The thermoplastic resin composition may be obtained by mixing the polyamide, the reinforcing agent, and the silane-based coupling agent. A mixing method is not particularly limited, and may use conventional melt kneaders such as a Banbury mixer, a single-screw extruder, a twin-screw extruder and a multi-screw extruder, and a pultrusion molding machine.

The thermoplastic resin composition thus obtained may be subjected to a method such as extrusion molding, compression molding, and injection molding, thereby obtaining a desired molded article.

The thermoplastic resin composition may be used in a variety of vehicle components that require excellent mechanical properties and dimensional stability. In addition, the thermoplastic resin composition may also be usefully used in the vehicle components that desire the reduction in weight and the unit cost of production, in addition to the aforementioned physical properties. Specifically, the thermoplastic resin composition may be used in a sunroof frame.

Hereinafter, the present disclosure will be described in more detail by examples. However, the present disclosure is not limited by the following examples.

Examples 1 and 2 and Comparative Examples 1 to 9

Thermoplastic resin compositions were prepared by using the compositions shown in Table 1 below.

[Table 1]

| Components | Examples [% by weight] | | Comparative Examples [% by weight] | | | | | | | | |
|---|---|---|---|---|---|---|---|---|---|---|---|
| | 1 | 2 | 1 | 2 | 3 | 4 | 5 | 6 | 7 | 8 | 9 |
| (A) | 57 | 57 | 57 | 57 | 59.5 | 54 | 57 | 57 | 57 | 57 | 57 |
| (B1) | 40 | - | - | - | - | - | - | - | - | - | - |
| (B2) | - | 40 | 40 | 40 | 40 | 40 | - | - | - | - | - |
| (B3) | - | - | - | - | - | - | 40 | - | - | - | - |
| (B4) | - | - | - | - | - | - | - | 40 | - | - | - |
| (B5) | - | - | - | - | - | - | - | - | 40 | - | - |
| (B6) | - | - | - | - | - | - | - | - | - | 40 | - |

(continued)

| Components | Examples [% by weight] | | Comparative Examples [% by weight] | | | | | | | | |
|---|---|---|---|---|---|---|---|---|---|---|---|
| | 1 | 2 | 1 | 2 | 3 | 4 | 5 | 6 | 7 | 8 | 9 |
| (B7) | - | - | - | - | - | - | - | - | - | - | 40 |
| (C1) | 3 | 3 | - | - | 0.5 | 5.5 | 3 | 3 | 3 | 3 | 3 |
| (C2) | - | - | 3 | - | - | - | - | - | - | - | - |
| (C3) | - | - | - | 3 | - | - | - | - | - | - | - |
| Total | 100 | 100 | 100 | 100 | 100 | 100 | 100 | 100 | 100 | 100 | 100 |

(A) Polyamide: Polyamide 6 having a number average molecular weight of about 50,000 (B1) Fibrous reinforcing agent having a flat-plate shape: As an reinforcing agent as shown in FIG. 1, a glass fiber was used which had an average short-side length in the cross section of about 6 μm, a flattening of about 4, a length of about 10 mm and to which 1.5% by weight of a sizing material was attached.

(B2) Fibrous reinforcing agent having a flat-plate shape: A glass fiber was used which had an average short-side length in the cross section of about 7 μm, a flattening of about 3, a length of about 10 mm and to which 1.5% by weight of a sizing material was attached.

(B3) Fibrous reinforcing agent having a flat-plate shape: A glass fiber was used which had an average short-side length in the cross section of about 10 μm, a flattening of about 1.5, a length of about 10 mm and to which 1.5% by weight of a sizing material was attached.

(B4) Fibrous reinforcing agent having a flat-plate shape: A glass fiber was used which had an average short-side length of the cross section of about 5 μm, a flattening of about 5.5, a length of about 10 mm and to which 1.5% by weight of a sizing material was attached.

(B5) Fibrous reinforcing agent having a flat-plate shape: A glass fiber was used which had an average short-side length in the cross section of about 7 μm, a flattening of about 3, a length of about 4 mm and to which 1.5% by weight of a sizing material was attached.

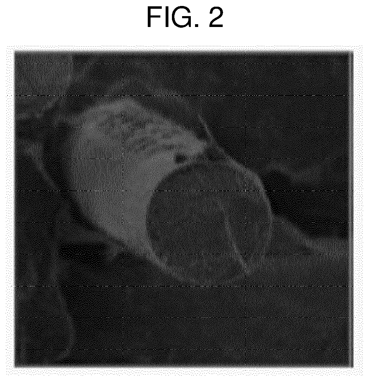

(B6) Fibrous reinforcing agent: A glass fiber was used which had a circular cross section as shown in FIG. 2, a diameter of about 12 μm, a length of about 10 mm and to which 1.5% by weight of a sizing material was attached.

(B7) Fibrous reinforcing agent: A glass fiber was used which had a circular cross section, a diameter of about 12 μm, a length of about 4 mm and to which 1.5% by weight of a sizing material was attached.

(C1) Tris[3-(trimethoxysilyl)propyl]isocyanurate (C2) 3-aminopropyltriethoxysilane (C3) Modified polypropylene in which maleic anhydride of about 8% by weight is grafted to polypropylene

A molded article was manufactured from each of the thermoplastic resin compositions prepared as above. Specifically, each of the thermoplastic resin compositions of Examples 1 and 2, Comparative Examples 1 to 6, and 8 was extruded with the pultrusion molding machine and then injection-molded to obtain a molded article. Each of the thermoplastic resin compositions of Comparative Examples 7 and 9 was extruded with a twin-screw extruder and then injection-molded to obtain a molded article.

The physical properties of each molded article were measured using the following methods and the results were evaluated.

- Tensile strength (MPa): Tensile strength was measured according to ASTM D638.
- Flexural strength (MPa): Flexural strength was measured according to ASTM D790.
- Flexural modulus (MPa): Flexural modulus was measured according to ASTM D790 standard.
- IZOD impact strength ($kJ/m^2$): IZOD impact strength was measured at room temperature (23°C) and low temperature (-30°C) under 1/4" notched condition according to ASTM D256.
- Heat deflection temperature (°C): The heat deflection temperature was measured when a surface pressure of 1.82 MPa was applied according to ASTM D648.
- Post-deformation: After injecting the composition into a flat-plate specimen mold having 100 mm (width) x 200 mm (length) x 3 mm (thickness) under the same injection conditions, the degree of deformation in a specimen was confirmed. The evaluation criteria are as follows: O: almost no bending, Δ: slight bending, X: severe bending.

The results are shown in Table 2 below.

[Table 2]

| Item | Examples | | Comparative Examples | | | | | | | | |
|---|---|---|---|---|---|---|---|---|---|---|---|
| | 1 | 2 | 1 | 2 | 3 | 4 | 5 | 6 | 7 | 8 | 9 |
| Specific gravity | 1.4 6 | 1.4 6 | 1.46 | 1.46 | 1.46 | 1.46 | 1.46 | 1.46 | 1.46 | 1.4 6 | 1.46 |
| Tensile strength [MPa] | 205 | 210 | 191 | 180 | 175 | 181 | 192 | 187 | 194 | 195 | 188 |
| Flexural strength [MPa] | 295 | 300 | 287 | 270 | 265 | 276 | 286 | 279 | 285 | 287 | 282 |
| Flexural modulus [MPa] | 11, 900 | 12, 000 | 11,20 0 | 10,50 0 | 10,10 0 | 10,70 0 | 10,80 0 | 10,50 0 | 11,00 0 | 11, 100 | 11,2 00 |
| IZOD (room temperature) [kJ/m$^2$] | 31 | 32 | 25 | 17 | 15 | 20 | 24 | 20 | 11 | 24 | 12 |
| IZOD (low temperature) [kJ/m$^2$] | 29 | 30 | 23 | 15 | 14 | 19 | 22 | 20 | 10 | 23 | 11 |
| Heat deflection temperature [°C] | 216 | 216 | 211 | 205 | 201 | 195 | 210 | 207 | 206 | 211 | 205 |
| Postdeformation | ○ | ○ | Δ | Δ | Δ | Δ | X | ○ | Δ | X | X |

(Types of coupling agent) It can be seen that as result of comparing the Examples and Comparative Examples 1 and 2, the molded article may have excellent mechanical properties and the post-deformation in the molded article may be inhibited, when the silane-based coupling agent having an isocyanate functional group was used as in the present disclosure.

(Content of silane-based coupling agent) It can be seen that as a result of comparing the Examples and Comparative Examples 3 and 4, an interfacial adhesion between the polyamide and the reinforcing agent was increased, so that the molded article had improved strength and impact resistance, and no post-deformation, when the silane-based coupling agent was included in an amount of 1% to 5% by weight as in the present disclosure.

(Flattening of reinforcing agent) It can be seen that as a result of comparing the Examples and Comparative Examples 5 and 6, the molded article had excellent dimensional stability so that no post-deformation occurred, and had improved mechanical properties, when the reinforcing agent having a flattening of 2 to 5 was used as in the present disclosure.

(Length of reinforcing agent) It can be seen that as a result of comparing the Examples and Comparative Example 7, the molded article had improved strength, rigidity and impact resistance, and also had excellent dimensional stability, when a long glass fiber having a long length was applied as in the present disclosure.

(Types of reinforcing agent) It can be seen that as a result of comparing the Examples and Comparative Examples 8 and 9, the molded article had significantly improved dimensional stability when the reinforcing agent having a flat-plate shape was used as in the present disclosure.

According to the present disclosure, it is possible to provide a thermoplastic resin composition that can help to reduce weight and the unit cost of production while providing high physical properties and dimensional stability desired for a frame of a panorama sunroof.

The effect of the present disclosure is not limited to the above-mentioned effect. It should be understood that the effect of the present disclosure includes all effects that can be inferred from the following descriptions.

Although various forms of the present disclosure has been described with reference to the accompanying drawings, those skilled in the art will understand that the present disclosure can be implemented in other specific forms without changing the technical spirit or essential features. Therefore, it is to be understood that various forms described hereinabove are illustrative rather than being restrictive in all aspects.

## Claims

1. A thermoplastic resin composition comprising:

   30% to 70% by weight of polyamide;
   20% to 60% by weight of a reinforcing agent including a glass fiber and formed in a flat-plate shape; and
   1% to 5% by weight of a silane-based coupling agent.

2. The thermoplastic resin composition of claim 1, wherein the polyamide includes an aliphatic polyamide.

3. The thermoplastic resin composition of claim 2, wherein the aliphatic polyamide includes at least one selected from a group consisting of polyamide 6, polyamide 46, polyamide 66, polyamide 610, polyamide 612, polyamide 6/12, polyamide 1010, polyamide 11, polyamide 1012, polyamide 12, polyamide 1212, and a combination thereof.

4. The thermoplastic resin composition of claim 1, wherein the polyamide has a number average molecular weight of 20,000 to 70,000.

5. The thermoplastic resin composition of claim 1, wherein the reinforcing agent has a flattening, represented by the following Equation 1, which is 2 to 5:

   [Equation 1]

   Average long-side length in cross section / average short-side length in cross section.

6. The thermoplastic resin composition of claim 1, wherein the reinforcing agent has an average short-side length of a cross section of 3 $\mu$m to 15 $\mu$m.

7. The thermoplastic resin composition of claim 1, wherein the reinforcing agent has a length of 5 mm to 15 mm.

8. The thermoplastic resin composition of claim 1, wherein the reinforcing agent includes a sizing material attached to a surface thereof.

9. The thermoplastic resin composition of claim 8, wherein the sizing material includes at least one selected from a group consisting of a urethane resin, an acrylic resin, a styrene resin, an epoxy resin, and a combination thereof.

10. The thermoplastic resin composition of claim 8, wherein the sizing material is included in an amount of 0.1% to 3% by weight based on the total weight of the thermoplastic resin composition.

11. The thermoplastic resin composition of claim 1, wherein the silane-based coupling agent includes an isocyanate functional group.

12. The thermoplastic resin composition of claim 11, wherein the isocyanate functional group in the silane-based coupling agent is hydrogen-bonded to the polyamide or is covalently bonded to an amine group of the polyamide.

13. The thermoplastic resin composition of claim 1, wherein the silane-based coupling agent includes at least one selected from a group consisting of 3-isocyanate propyl trimethoxysilane, 3-isocyanate propyl triethoxysilane, tris[3-(trimethoxysilyl)propyl]isocyanurate, and a combination thereof.

14. A sunroof frame comprising a thermoplastic resin composition, the thermoplastic resin composition comprising:

30% to 70% by weight of polyamide;
20% to 60% by weight of a reinforcing agent including a glass fiber and formed in a flat-plate shape; and
1% to 5% by weight of a silane-based coupling agent.

FIG. 1

FIG. 2

Europäisches
Patentamt

European
Patent Office

Office européen
des brevets

# EUROPEAN SEARCH REPORT

Application Number

EP 21 17 7361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 231 611 A (SHANGHAI RIJING ENGINEERING PLASTIC SCI TECH CO LTD) 24 December 2014 (2014-12-24) | 1-4,6, 8-10,14 | INV. C08L77/02 C08K5/5455 C08K7/14 |
| A | * page 5; example 3 * | 5,7, 11-13 | |
| | ----- | | |
| X | JP 2009 120701 A (UNITIKA LTD) 4 June 2009 (2009-06-04) | 1-6,8, 10,14 | |
| A | * page 11; example 9 * | 7,9, 11-13 | |
| | ----- | | |

TECHNICAL FIELDS
SEARCHED (IPC)

C08L
C08K

The present search report has been drawn up for all claims

| Place of search | Date of completion of the search | Examiner |
|---|---|---|
| Munich | 20 October 2021 | Wohnhaas, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 21 17 7361

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2021

| Patent document cited in search report | Publication date | Patent family member(s) | Publication date |
|---|---|---|---|
| CN 104231611 A | 24-12-2014 | NONE | |
| JP 2009120701 A | 04-06-2009 | NONE | |

EPO FORM P0459

For more details about this annex : see Official Journal of the European Patent Office, No. 12/82